# EUROPEAN PATENT SPECIFICATION

(11) **EP 3 836 388 B1**
(45) Date of publication and mention of the grant of the patent: **26.10.2022**
(21) Application number: 20209830.7
(22) Date of filing: 25.11.2020
(51) Int. Cl.: H02S 20/26, H02S 20/22, H02S 30/00

(54) **PROFILED SECTION FOR SECURING A SOLAR PANEL**
PROFILABSCHNITT ZUR BEFESTIGUNG EINES SOLARPANEELS
SECTION PROFILÉE POUR FIXER UN PANNEAU SOLAIRE

(30) Priority: 05.12.2019 BE 201905872
(43) Date of publication of application: 16.06.2021
(73) Proprietor: Helios Trading NV, 9880 Aalter (BE)
(72) Inventor: Vanthournout, Gwenn, 8520 Kuurne (BE)
(74) Representative: IP HILLS NV

(56) References cited:
- CH-A1- 713 372
- US-A1- 2010 126 087
- US-A1- 2011 283 635

## Description

### Technical field

The present invention relates to securing a solar panel on or near an apparatus which contains electrical or electronic components which are supplied with electrical energy which is generated by the solar panel, such as for example a solar control means which is attached to the outer façade of a building. In the context of the present invention, the term solar panel is understood to mean both one single solar cell - a photovoltaic cell or photo-electrochemical cell - as an assembly of several solar cells in a panel.

### Background

In many situations, a solar panel is fitted on or next to an apparatus with electrical or electronic components in such a way that the electrical or electronic components can be supplied with electrical energy which is generated from sunlight. If the electrical or electronic components also have to function at times when there is no sunlight, a battery will be provided in addition to a solar panel in which the electrical energy generated by the solar panel is temporarily stored until the electrical or electronic components are switched on. Thus, solar panels, optionally in combination with a battery, are fitted on or next to a solar control means on the outer facade of a building, an electrical screen or roller blind, a ventilation module, an illuminated advertising sign, etc. The use of solar energy for such an apparatus which is usually attached to the outer façade of a building has the advantage that no electrical cables have to be provided in the building to the location of the apparatus and no holes have to be drilled through façade walls in order to pass the electrical wiring from the inside to the outside of the building. Should the apparatus be removed at some point, then it is no longer necessary to suppress or hide electrical cables or wiring.

If solar energy is chosen in order to supply an apparatus with electrical power, then the fitter of the apparatus will typically choose a commercially available solar panel and glue or screw the latter onto the housing of the apparatus which is to be supplied with power, for example onto the outside of the housing of a solar control means. In addition, a hole will be made in the housing of this apparatus, so that the outgoing wiring of the solar panel can be introduced into the housing of the apparatus in order to supply the electrical or electronic components with power. If a battery is required to temporarily store the electrical energy of the solar panel, the fitter has to find or create a space inside the housing of the apparatus to hide a suitable battery. Fitting a solar panel on or next to an apparatus with electrical or electronic components thus requires creativity from the fitter, is usually complicated and time-consuming for the fitter and often results in dissatisfied end user because the solar panel cannot be integrated in or with the apparatus, the solar panel has a detrimental effect on the minimalist appearance and the sleek design of the apparatus which it supplies with energy and thus also on the façade of the building, and a solar panel which is glued or screwed onto the housing of another apparatus causes dust and dirt to accumulate and thus requires additional maintenance.

Swiss patent application CH 713372 A1 describes a system to secure facade elements, like for instance a solar panel (15 in Fig. 1). The mounting system consists of a support profile (21, 23, 25 in Fig. 1 - Fig. 4), a slide (77), an anchoring element (19) and a second profile (17). Fig. 1 in CH 713372 A1 shows how solar panel (15) can be secured to the variant support profiles (21, 23, 25). In each of situations, the solar panel (15) is secured to a second profile (17). The second profile (17) is then releasably attached to the slide (77) via the anchoring element (19). The slide (77) is clamped into the profile (21, 23, 25). The slide (77) is shown in more detail in Fig. 5 of CH713372A1.

The system known from CH 713372 A1 thus requires that the solar panel is first mounted on a second profile, that the second profile is secured to an anchoring element, and that the anchoring element is releasably connected to a first profile. Installing a solar panel thus remains complex and time consuming for the technician, and further requires the use of intermediary components like the anchoring element and the second profile. The system known from CH 713372 A1 also does not allow integration with an existing apparatus or facade such that the minimalistic or sleek appearance of such apparatus or facade remains unaltered by the solar panel.

There is thus a general demand for an improved solution to secure a solar panel in a way which is more agreeable, both visually and technically, with the apparatus which will be supplied with electrical energy from the solar panel. The aim is for such an improved solution not to detract from or at least be more aligned with the minimalist appearance and the sleek design of existing apparatuses. It is furthermore desirable for such an improved solution to render fitting and installation for a fitter easier, to facilitate maintenance after installation and to increase the general satisfaction of the end user, i.e. the owner or tenant of the building.

### Summary of the invention

According to a first aspect, the invention relates to a profiled section for securing a solar panel as defined in claim 1, said profiled section comprising:
- an upright wall with an outer surface finished to glue said solar panel to, and an inner surface;
- a first channel-like element which extends from said outer surface of said upright wall and whose bottom side is aligned with the bottom side of said upright wall; and
- a second channel-like element which extends from said inner surface of said upright wall at the location of the top side of said upright wall,
- wherein said first channel-like element and said second channel-like element are formed in such a way that an inverted L-shaped filler piece, placed upside down next to said solar panel, can be clamped into said profiled section.

Embodiments of the profiled section according to the invention make it possible to place the solar panel, glued onto the outer surface of the upright wall of the profiled section and possibly supported by the first channel-like element, in one plane with the housing of the apparatus which is to be supplied with electrical power, for example the housing of a solar control means. The solar panel thus no longer has to be glued or screwed onto the housing of such an apparatus. In addition, embodiments of the profiled section according to the invention make it possible to securely clamp an inverted L-shaped filler piece by means of the first channel-like element and the second channel-like element. The end of the short leg of the inverted L-shaped element will then be clamped to the top side of the profiled section in the second channel-like element, and the end of the long leg will be clamped to the bottom side of the profiled section in the first channel-like element. By providing the first channel-like element at the bottom of the outer surface of the upright wall and the second channel-like element at the top of the inner surface of the upright wall, the inverted L-shaped fitting is clamped such that forces in the depth direction and/or downward forces in the height direction do not move the inverted L-shaped fitting. Since the first channel-like element extends along the outer surface of the profiled section, the long leg of the inverted L-shaped filler piece will also come to lie on the outside of the profiled section, i.e. next to the solar panel. The thickness of the long leg of the inverted L-shaped filler piece may then be chosen such that the outer surface of the solar panel, the inverted L-shaped filler piece and the housing of the apparatus which is to be supplied with electrical power by the solar panel come to lie in one plane. The inverted L-shaped fitting may be made from plastic or metal, be finished in the colour of the outer surface of the solar panel and its width may be chosen such that the solar panel and the inverted L-shaped fitting, if placed adjoining each other, take up the entire length of the profiled section, as a result of which the profiled section itself is hidden or hardly visible. If the length of the profiled section is adapted to the width of the housing of the apparatus which will be supplied with electrical power by the solar panel, a completely minimalist, sleek integration of solar panel and housing of the apparatus to be supplied with electrical power is achieved. In order to attach an embodiment of the profiled section according to the invention to the bottom of the housing of the apparatus which is to be supplied with electrical power, the fitter only has to glue the solar panel to the upright wall of the profiled section (for example by using double-sided adhesive tape which is already provided on the rear side of the solar panel or still has to be provided), and to clamp the inverted L-shaped filler piece into the profiled section, next to the solar panel. The operations are simple, take little time and do not require any creativity on the part of the fitter. In addition, the fitter does not have to damage the finished front side of the housing of the apparatus to be supplied with electrical power. The solar panel is enclosed at the bottom by the first channel-like element and, in addition, comes to lie in one plane with the housing of the apparatus to be supplied with electrical power. In this way, the solar panel no longer has projecting edges on which dust or dirt can accumulate, which facilitates maintenance thereof.

In embodiments of the profiled section for securing a solar panel according to the present invention, defined in claim 2, said first channel-like element comprises:
- a first horizontal wall which extends from said outer surface along the entire length of said upright wall; and
- a first upright wall which extends from the end of said first horizontal wall along the entire length of said upright wall,
- wherein the width of said first horizontal wall corresponds to the thickness of said solar panel.

In such an embodiment, the first channel-like element is U-shaped and the first channel-like element is formed by the bottom side of the upright wall of the profiled section, a first horizontal wall and a first upright wall. By giving the first horizontal wall a width which, within tolerances, is equal to the thickness of the solar panel, the front surface of that solar panel will, when the rear side of the latter is glued onto the upright wall of the profiled section, come to lie in the same plane as the first upright wall. This contributes to the minimalist appearance and the sleek design. The long leg of the inverted L-shaped fitting may be clamped into the first channel-like element against the first upright wall, for example by sliding it into the first channel-like element by means of a pushing movement, so that the outer surface of the long leg of the inverted L-shaped fitting also comes to lie in the same plane as the first upright wall and thus as the front surface of the solar panel which is fitted next thereto. This further contributes to the minimalist appearance, the sleek design, simplicity of installation and maintenance.

In embodiments of the profiled section for securing a solar panel according to the present invention, defined in claim 3, said second channel-like element comprises:
- a second horizontal wall which extends from said inner surface along the entire length of said upright wall; and
- a second upright wall which extends from the end of said second horizontal wall along the entire length of said upright wall,
- wherein the width of said second horizontal wall corresponds to a dimension of a first clamping element of said inverted L-shaped filler piece.

In such an embodiment, the second channel-like element is U-shaped and the second channel-like element is formed by the top side of the upright wall of the profiled section, a second horizontal wall and a second upright wall. By giving the second horizontal wall a width which, within tolerances, is equal to a dimension of a first clamping element provided on the end of the short leg of the inverted L-shaped filler piece, the short leg of the inverted L-shaped fitting can be clamped into the second channel-like element against the second upright wall, for example by sliding it into the second channel-like element by means of a pushing movement. In this way, the inverted L-shaped filler piece is clamped between the first upright wall of the first channel-like element and the second upright wall of the second channel-like element, as a result of which it becomes impossible for the filler piece to move with respect to the profiled section in the depth direction. This contributes to the ease of installation and the realisation of a minimalist, sleek embodiment which requires little maintenance.

In embodiments of the profiled section for securing a solar panel according to the present invention, defined in claim 4, said upright wall comprises:
- a horizontal support element which extends from said outer surface along the entire length of said upright wall into the space of said first channel-like element to support said L-shaped filler piece.

Thus, a support is possibly provided in the U-shaped channel at the bottom of the profiled section, on which support the inverted L-shaped filler piece rests. The upper surface of this support is preferably - within tolerances - in the same horizontal plane as the top side of the first upright wall in such a way that the inverted L-shaped filler piece can simultaneously rest on the support and the first upright wall of the channel. Furthermore, the support preferably extends along the entire length of the vertical wall of the profiled section and can be provided as a projection having a depth of 1 to at most a few millimetres. In alternative embodiments, the support may obviously also be provided as a projection with interruptions along the vertical wall of the profiled section, so that support is not provided along the entire length of the profiled section. By adapting the design of the inverted L-shaped filler piece, the support is not able to align with the upper surface of the first upright wall either and can still, together with the first upright wall, offer support to such a filler piece.

In embodiments of the profiled section for securing a solar panel according to the present invention, defined in claim 5, said second channel-like element furthermore comprises:
- a horizontal rail which extends from said second upright wall along the entire length of upright vertical wall into the space of said second channel-like element, so that said first clamping element of said inverted L-shaped filler piece, if of U-shaped design, can be clamped into said second channel-like element by sliding along said horizontal rail.

Specifically, an advantageous embodiment of the profiled section according to the present invention makes it possible to clamp a U-shaped end of the short leg of the inverted L-shaped filler piece in the second channel-like element by sliding. In order to make this possible in a possible embodiment of the profiled section, a horizontal rail is provided along the second upright wall. This horizontal rail, a projection of 1 to a few millimetres from the second upright wall into the second channel-like space, may be continuous or interrupted. The dimensions of the rail are - within tolerances - preferably adapted to the dimensions of the U-shaped end which is provided on the short leg of the inverted L-shaped filler piece, so that the rail, once slid over the rail, prevents an upward or downward movement of the filler piece. Providing such a rail in an embodiment of the profiled section further contributes to the ease of installation and the realisation of a minimalist, sleek design which requires little to no maintenance.

In embodiments of the profiled section for securing a solar panel according to the present invention, defined in claim 6, said upright wall furthermore comprises a V-shaped part which extends along the entire length of said upright wall.

Such a V-shaped part may, for example, be provided with a pointed or flat bottom of the V shape. Due to the V-shaped part, space is created along the entire length of the profiled section space for passing cables, in for example the electrical wiring of the solar panel, along the upright wall. Irrespective of the type of solar panel which will be attached to the upright wall of the profiled section and irrespective of the position in the solar panel where electrical wiring is provided by the manufacturer of such a solar panel, the V-shaped part will always allow the electrical wires to be passed along the profiled section to the end of the profiled section in order to be connected there or to a point where the wiring can be pushed through the profiled section in order to be connected behind the profiled section. The V-shaped part thus contributes further to the ease of installation and makes it possible to use the same profiled section for different types of solar panels from different manufacturers.

In embodiments of the profiled section for securing a solar panel according to the present invention, defined in claim 7, an opening is provided in said V-shaped part.

Such an opening makes it possible to take the cables or wires which are passed along the upright wall via the V-shaped part through the upright wall to the rear side of the profiled section. Behind the profiled section, the cables or wires can then be connected further, for example to an electrical battery, an electrical power supply, electrical components which will be supplied with the energy from the solar panel, such as a motor of a solar control means or fan, a controller or control element, etc. Thus, providing an opening in the V-shaped part of the upright wall contributes further to the ease of installation.

Embodiments of the profiled section for securing a solar panel according to the present invention, defined in claim 8, furthermore comprise a duct, said duct comprising:
- a bottom which extends from the bottom side of said inner wall of said upright wall;
- a vertical wall which extends from the end of said bottom; and
- a cover element which extends from the end of said vertical wall,
- wherein said upright wall, said bottom, said vertical wall and said cover element together form a duct space.

Optionally, the profiled section on the rear side of the upright wall may thus provide a duct, i.e. a space along the length of the profiled section in which components can be put away, such as for example a battery in which the electrical energy from the solar panel can be stored temporarily. The duct is formed by the upright wall of the profiled section, a bottom wall which extends from the rear side, referred to as the inner wall, of the upright wall, a vertical wall which rises from the end of the bottom wall, and a top wall or cover element which returns from the top side of the vertical wall to the top side of the upright wall, where the duct is preferably closed by a fixed connection between the cover element and the second channel-like element. The duct forms a space for components which cannot be stowed away in the V-shaped space which is possibly provided in the upright wall, and thus contributes further to the ease of installation.

In embodiments of the profiled section for securing a solar panel according to the present invention, defined in claim 9, one or more securing holes are provided in said cover element.

Such securing holes make it possible to hang the profiled section from the bottom of a wall or apparatus, for example the bottom of the housing of a solar control means, by means of, for example, a screw connection. The securing holes are preferably positioned in such a way that when the profiled section is hung from a wall or apparatus, the front surface of the solar panel which is supported by the profiled section comes to lie in one plane with the wall of the housing of the apparatus from which the profiled section is hung. In this way, the securing holes contribute to creating a minimalist, sleek design, integrated in a wall or apparatus, in which case the entirety can be maintained easily. The person skilled in the art will understand that, in alternative embodiments, the securing holes may also be configured in such a way that the profiled section with the solar panel may be attached on top of the housing of another apparatus, for example a solar control means. To this end, the securing holes may be provided in the cover element or the top wall of the duct - in which case the profiled section will have to be attached upside down to the housing of the other apparatus - or the securing holes may be provided in the bottom wall of the duct in such a way that the profiled section does not have to be inverted when attaching it on top of the housing of another apparatus. Variants in which securing holes are provided both in the bottom wall and in the top wall of the duct are also conceivable.

In embodiments of the profiled section for securing a solar panel according to the present invention, defined in claim 10, an opening is furthermore provided in said cover element.

Such an opening makes it possible to pass cabling, for example electrical wiring, from inside the duct space to the outside. In this way, electrical cabling may, for example, be passed through to a space in the housing of an apparatus, for example a space in the housing of a solar control means, so that electrical or electronic components which are present therein can be supplied with electrical energy from the solar panel or from a battery in the duct space which provides a temporary store for the energy of the solar panel. Thus, the opening in turn contributes to the ease of installation, more specifically to the ease with which the solar panel which is held by the profiled section can be connected to or integrated in another apparatus in which components are supplied with electrical power with energy from the solar panel. In alternative embodiments, the passage opening for cables may, just like the securing holes, be provided in the bottom wall of the duct in order to make it easier to pass cables through in a situation where the profiled section is placed on top of another apparatus whose electrical/electronic components will be supplied with energy from the solar panel. Variants in which passage openings are provided in the bottom wall and the top wall of the duct are also conceivable.

In embodiments of the profiled section for securing a solar panel according to the present invention, defined in claim 11, said cover element furthermore forms part of a housing element for a solar control means.

Specifically, in an advantageous embodiment, the cover element or the top plate of the duct will form part of the bottom plate of the housing of a solar control means. This prevents the cover element from having to be attached to the bottom plate or top plate of the housing of a solar control means by means of securing holes and screw connections which are provided in the former, thus substantially improving the ease of installation. In addition, this makes it possible for the solar panel to be fully integrated with the solar control means (and thus form an integral part thereof) and to ensure that the front surface of the solar panel - except for tolerances - comes to lie in one plane with the front surface of the housing of the solar control means without being dependent on the position of the securing holes. This can now easily be achieved by dimensioning the bottom surface of the housing of the solar control means such that its front side is aligned with the first upright wall of the first channel-like element of the profiled section which now holds the solar panel and is also a part of the housing of the solar control means.

In embodiments of the profiled section for securing a solar panel according to the present invention, defined in claim 12, said housing element for a solar control means comprises a vertical outer wall in the same plane as said first upright wall.

In this way, the vertical outer wall of the housing of the solar control means can - except for tolerances - be placed in one plane with the first upright wall of the first channel-like element. In addition, the vertical outer wall of the solar control means and the first upright wall of the first channel-like element will be made from the same material and be given the same finish, which contributes further to the minimalist, integrated design which is aimed at and which results in ease of maintenance.

According to a second aspect, the invention relates to an installation kit as defined in claim 13, the installation kit comprising:
- a solar panel;
- an inverted L-shaped filler piece; and
- a profiled section for securing said solar panel and said L-shaped filler piece, said profiled section comprising:
   - an upright wall with an outer surface finished to glue said solar panel to, and an inner surface;
      - a first channel-like element which extends from said outer surface of said upright wall and whose bottom side is aligned with the bottom side of said upright wall; and
      - a second channel-like element which extends from said inner surface of said upright wall at the location of the top side of said upright wall,
      - wherein said first channel-like element and said second channel-like element are formed in such a way that, if placed upside down next to said solar panel, said inverted L-shaped filler piece can be clamped into said profiled section.

According to a second aspect of the invention, the profiled section according to the present invention, the solar panel and the filler piece thus form part of an installation kit which enables the fitter to fit the solar panel, optionally to integrate it with another apparatus, such as a solar control means, without encountering any significant installation difficulty. In order to install it, the fitter may stick the solar panel against the outer surface of the upright wall of the profiled section, for example by using double-sided adhesive tape. Then, the inverted L-shaped filler piece may be clamped between the first channel-like element and the second channel-like element of the profiled section by means of a pushing movement, as a result of which the outer surface of the long leg of the inverted L-shaped filler piece comes to lie in the same plane as the front surface of the solar panel. If the inverted L-shaped filler piece is pushed until it touches the solar panel, a sleek, minimalist, maintenance-friendly solar panel installation will be achieved. The front surface of the solar panel is possibly finished with a printed pattern in order to minimize the visual difference with the inverted L-shaped filler piece.

Embodiments of the installation kit according to the present invention, defined in claim 14, furthermore comprise a solar control means.

Specifically, embodiments in which the solar panel will be used to supply electrical energy to a solar control means preferably also comprise the solar control means. This allows the fitter to fit the solar panel and filler piece on the profiled section and to make sure that the front surface of the solar panel and the outer surface of the long leg of the inverted L-shaped filler piece are fitted in one plane with the housing of the solar control means. The latter may be achieved by connecting the profiled section to the housing of the solar control means.

In embodiments of the installation kit according to the present invention, defined in claim 15, said solar control means comprise:
- a housing element which comprises said profiled section.

In such an embodiment, in which the profiled section which will support the solar panel forms part of a housing element of the solar control means, solar control means, solar panel and inverted L-shaped filler piece may be completely integrated to form a unit with a sleek, minimalist form which required little to no maintenance.

In embodiments of the installation kit according to the present invention, defined in claim 16, the L-shaped filler piece comprises a U-shaped part at an end of the short leg and two support walls at the end of the long leg, enabling the L-shaped filler piece to slide along a horizontal rail in the second channel-like element and along a horizontal support element in the first channel-like element.

### Brief description of the drawings

Fig. 1 illustrates an embodiment of the profiled section for securing a solar panel according to the present invention;
Fig. 2 illustrates an embodiment of the profiled section for securing a solar panel according to the present invention, together with an inverted L-shaped filler piece;
Fig. 3 illustrates an embodiment of the profiled section for securing a solar panel according to the present invention, together with an inverted L-shaped filler piece and two solar panels, during installation;
Fig. 4 illustrates an embodiment of the profiled section for securing a solar panel according to the present invention, together with an inverted L-shaped filler piece and two solar panels, in the fitted position;
Fig. 5 illustrates an embodiment of the installation kit according to the present invention, comprising a profiled section, an inverted L-shaped filler piece, two solar panels and two housing elements of a solar control means;
Fig. 6 illustrates an embodiment of the installation kit according to the present invention, comprising a profiled section, an inverted L-shaped filler piece, two solar panels and two housing elements of a solar control means, in the fitted position;
Fig. 7 illustrates an embodiment of the installation kit according to the present invention, comprising a profiled section, an inverted L-shaped filler piece, two solar panels, two housing elements of a solar control means and side walls for profiled section and solar control means;
Fig. 8 illustrates another embodiment of the profiled section for securing a solar panel according to the present invention, together with an inverted L-shaped filler piece, and two solar panels, in the fitted position.

### Description of embodiments

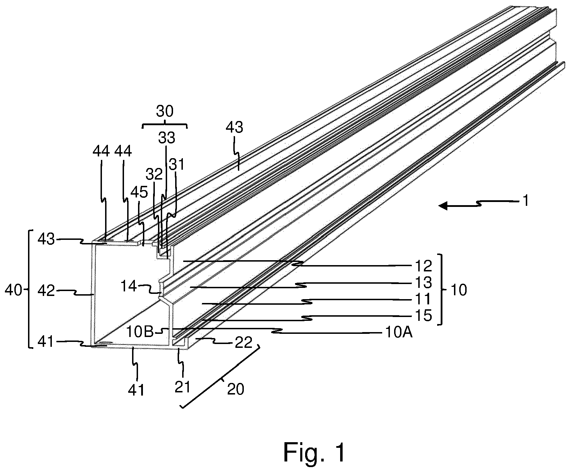

Fig. 1 shows an embodiment of the profiled section 1 for securing a solar panel according to the present invention. The solar panel itself which can be secured on profiled section 1 is not shown in Fig. 1. Profiled section 1 comprises a (vertical) upright wall 10, a first channel-like part 20, a second channel-like part 30, and a duct 40. The upright wall 10 comprises a bottom vertical part 11, a top vertical part 12 and a V-shaped part 13 between the bottom vertical part 11 and the top vertical part 12. In the embodiment shown in Fig. 1, the V-shaped part 13 has a flat bottom, but alternative embodiments may be conceived in which the V-shaped part 13 is configured differently, for example with a pointed or rounded bottom, or is not even configured. The V-shaped part 13 is provided in the upright wall 10 in order to run wiring of the solar panel which is attached to the upright wall 10, for example via an adhesive connection, along the profiled section 1 to an opening 14 in the V-shaped part 13 in order to take it from the outside 10A to the inside 10B of the profiled section 1 via this opening 14. However, the person skilled in the art will understand that the V-shaped part 13 may be absent in alternative embodiments of the profiled section 1 in which, for example, an opening is provided in the upright wall 10 at the position where the wiring of the solar panel is situated. The upright wall 10 furthermore comprises a support element 15, more specifically a horizontal projection of 1 millimetre to at most a few millimetres, which extends along the entire length of the profiled section 1 on the outer surface 10A of the upright wall 10, at the location of the first channel-like part 20.

The first channel-like part 20 comprises a first horizontal wall 21 and a first (vertical) upright wall 22. The first horizontal wall 21 extends along the entire length of the profiled section 1 on the outside 10A of the upright wall 10. The first horizontal wall 21 is aligned with the bottom side of the upright wall 10. The first upright wall 22 is erected from the end of the horizontal wall 21 and also extends along the entire length of the profiled section 1 in such a way that the first horizontal wall 21, the first upright wall 22 and the bottom side of the upright wall 10 of the profiled section 1 together from the first channel-like element 20 at the bottom of the outside of upright wall 10.

The second channel-like part 30 comprises a second horizontal wall 31 and a second (vertical) upright wall 32. The top side of the second upright wall 32 is aligned with the top side of the upright wall 10 of the profiled section 1. The second horizontal wall 31 extends along the entire length of the profiled section 1, on the inside 10B of the upright wall 10. The second upright wall 32 is erected from the end of the second horizontal wall 31 and also extends along the entire length of the profiled section 1 in such a way that the second horizontal wall 31, the second upright wall 32 and the top side of the upright wall 10 of the profiled section 1 together form second channel-like element 30 at the top of the inside of upright wall 10. In the embodiment shown in Fig. 1, the second channel-like part 30 furthermore comprises a horizontal rail 33 which extends along the entire length of the profiled section 1. In Fig. 1, the horizontal rail 33 is configured as a projection of 1 millimetre to at most a few millimetres from the second upright wall 32 in the channel-like space which is formed by the second horizontal wall 31, the second upright wall 32 and the top side of upright wall 10.

The profiled section 1 from Fig. 1 furthermore comprises a duct 40 which is formed on the inside 10B of upright wall 10 by a horizontal bottom wall 41, a vertical duct wall 42 and a horizontal cover element 43. The horizontal bottom wall 41 extends along the entire length of the profiled section 1 from the bottom side of upright wall 10. At the end of the horizontal bottom wall 41, the vertical duct wall 42 is erected with a height which corresponds to the height of upright wall 10. Finally, the cover element 43 closes the duct 40 by connecting the top side of the vertical duct wall 42 to the top side of the second channel-like part 30, more specifically to the top side of the second upright wall 32 which forms part of this second channel-like element 30. The duct 40 forms a closed space at the rear side of the profiled section 1 in which components can be stowed away which are connected to the solar panel which is secured by the profiled section 1, such as for example a battery in which the electrical energy which is generated by the solar panel can be stored temporarily. In the embodiment shown in Fig. 1, the cover element 43 of the duct 40 comprises securing holes 44 which make it possible to hang the profiled section 1 on a wall or housing of an apparatus under which the solar panel is placed. In the embodiment shown in Fig. 1, the cover element 43 of the duct 40 furthermore comprises an opening 45 for passing cabling, for example electrical wiring, from the duct space to, for example, an apparatus under which the profiled section 1 is placed in such a way that the solar panel which is supported by the profiled section 1 can supply electrical and/or electronic components in this apparatus directly or indirectly (e.g. via a battery) with electrical energy.

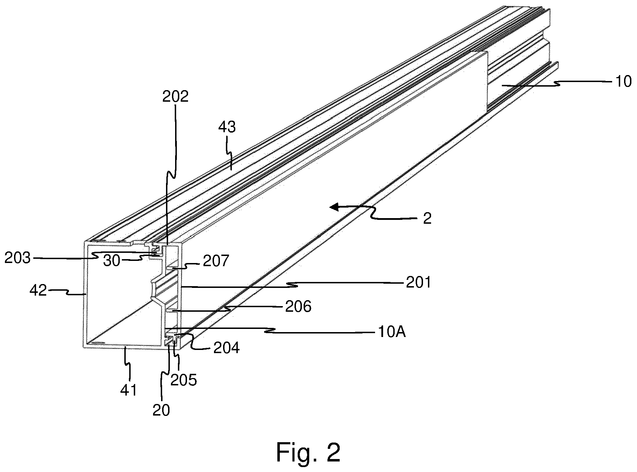

Fig. 2 shows the embodiment of the profiled section for securing a solar panel from Fig. 1, comprising upright wall 10, first channel-like part 20, second channel-like part 30 and duct walls 41, 42 and 43, together with an inverted L-shaped filler piece 2. The inverted L-shaped filler piece 2 is made from plastic or metal and comprises a long leg 201 and short leg 202 whose outer surfaces are finished, for example are painted in a colour which is identical to or is chosen on the basis of the colour of the housing of the apparatus under which profiled section 1 is hung. The long leg 201 and short leg 202 are dimensioned such that, if turned upside down, the L-shaped filler piece 2 may be clamped between the first upright wall 22 of the first channel-like part 20 and the second upright wall 32 of the second channel-like part 30. At the end of the short leg 202, the L-shaped filler piece 2 furthermore comprises a U-shaped part 203 and two supporting walls 204 and 205 at the end of the long leg 201 which ensure that the L-shaped filler piece 2 can, via a pushing movement, be pushed over the horizontal rail 33 in the second channel-like part 30 of profiled section 1 and along the horizontal support element 15 in the first channel-like part 20 of profiled section 1. While pushing the inverted L-shaped part 2 over rail 33 and along support element 15, the inverted L-shaped part 2 is clamped between the first upright wall 22 of the first channel-like part 20 and the second upright wall 32 of the second channel-like part 30. More specifically, the vertical supporting wall 205 which is provided at the end of the long leg 201 of the L-shaped filler piece will be pushed against the inside of the first upright wall 22 of the first channel-like part 20 in a clamping manner, whereas the end of the short leg 202 and the U-shaped part 203 are pushed against the inside of the second upright wall 32 of the second channel-like part 30 in a clamping manner. In the embodiment which is illustrated by Fig. 2, the inverted L-shaped filler piece 2 furthermore comprises additional horizontal supporting walls 206 and 207 which extend horizontally from the long leg 201 and have a depth which is equal to the width of the first horizontal wall 21 of the first channel-like element. In this way, the supporting walls 206 and 207 ensure that the long leg 201 of the L-shaped filler piece 2 remains, along the entire length, at the same distance from the upright wall 10 against which these supporting walls 206 and 207 will rest. By clamping the U shape 203 around rail 33 and the support of wall 204 on support element 15, a vertical movement of the inverted L-shaped filler piece 2 in an upward or downward direction is made impossible. The supporting walls 204, 206 and 207 furthermore ensure that a horizontal movement in the depth direction towards profiled section 1 is made impossible, whereas a horizontal movement away from profiled section 1 is prevented by the vertical supporting wall 205 and clamping the U-shaped part 203 in the second channel-like element 30.

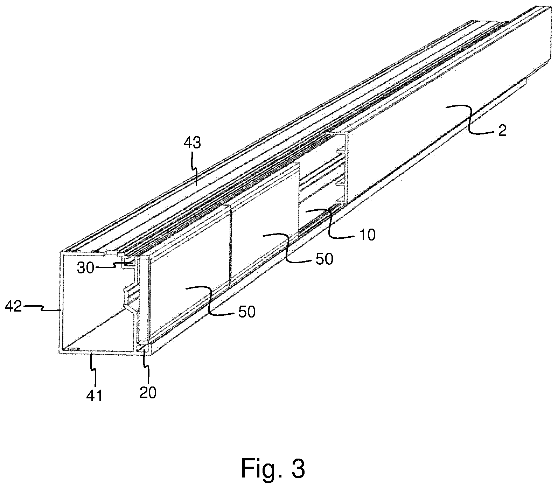

Fig. 3 shows the embodiment of the profiled section 1 from Fig. 1 comprising upright wall 10, first channel-like element 20, second channel-like element 30 and duct walls 41, 42 and 43, together with the inverted L-shaped filler piece 2 from Fig. 2 and two solar panels 50, during fitting. In order to be fitted, the solar panels 50 are first attached to the upright wall 10 of the profiled section 1. This may be done, for example, by using double-sided adhesive tape which is applied to or provided on the rear wall of the solar cells 50. The solar cells 50 have a height which corresponds to the height of the upright wall 10 minus the height of the first upright wall 22 of the first channel-like part 20. In this way, the solar cell 50 can rest on the first upright wall 22 and/or on the support element 15 provided in the first channel-like part 20, while the top side of the solar cell is aligned with the top side of the upright wall 10. The width of the first channel-like element 20, in other words the depth/width of the first horizontal wall 21, is preferably adapted to the thickness of the solar cell 50 in such a way that - after the solar cell 50 has been attached to the upright wall 10 - the front surface of solar cell 50 comes to lie in the same plane as the first upright wall 22 of the channel-like element 20. After the solar cells 50 have been attached, the inverted L-shaped filler piece 2 is pushed over rail 33 and along support element 15 and first upright wall 22 via a pushing movement. Due to this pushing movement, the inverted L-shaped filler piece 2 is clamped in the profiled section 1 until it adjoins the solar cells 50. The length of the inverted L-shaped filler piece 2 may be adapted to the length of the profiled section 1 which is still free beforehand in such a way that the solar cells 50 and the inverted L-shaped fitting 2 together take up the entire length of the profiled section 1. Alternatively, the inverted L-shaped filler piece 2 may be sawn off or cut off in the length direction after it has been pushed into the profiled section 1.

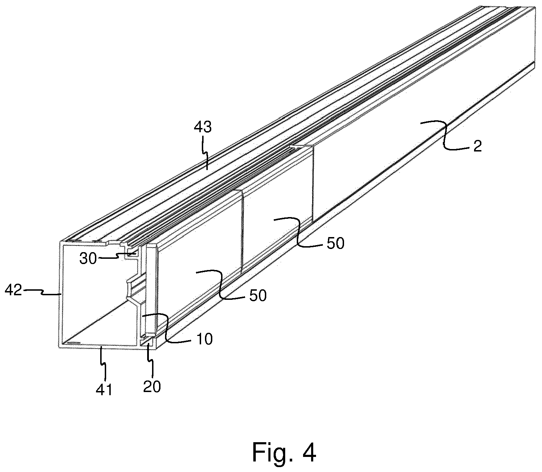

Fig. 4 shows the result of the installation of the profiled section 1 onto which two solar cells 50 were secured and whose remaining length is filled with the filler piece 2 whose length has been adjusted.

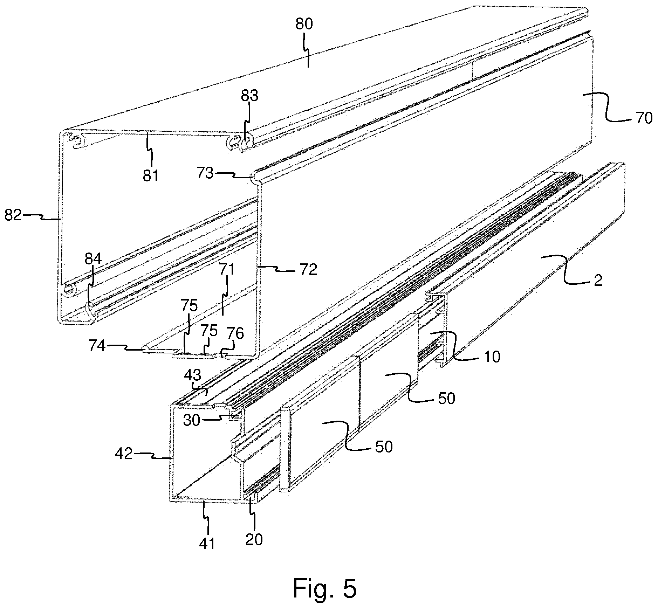

Fig. 5 illustrates an embodiment of the installation kit according to the present invention. The installation kit which is shown in Fig. 5 comprises the profiled section 1 from Fig. 1 comprising upright wall 10, first channel-like part 20, second channel-like part 30 and duct walls 41, 42 and 43. The installation kit from Fig. 5 furthermore comprises the inverted L-shaped filler piece 2 from Fig. 2 and the two solar panels 50 from Fig. 3. Finally, the installation kit from Fig. 5 also comprises two housing elements 70 and 80 of a solar control means under which the profiled section 1 with solar cells 50 and filler piece 2 is hung in such a way that electrical/electronic components of the solar control means can be supplied with electrical power by energy from the solar cells 50, and an integrated, minimalist installation is achieved which requires little or no maintenance. The first housing element 70 is L-shaped and comprises the bottom wall 71 and front wall 72 of the housing. The front wall 72 is fitted with a first anchoring element 73, and the bottom wall 71 is fitted with a second anchoring element 74. The anchoring elements 73 and 74 are provided in order to anchor the first housing element 70 to the second housing element 80. The bottom wall 71 of the first housing element 70 furthermore comprises securing holes 75 which make it possible to hang the profiled section 1 from housing element 70 of the solar control means by means of screws through the respective securing holes 44 provided in the covering wall 43 of the duct 40 and through the respective securing holes 75. In addition, the bottom wall 71 of the first housing element 70 comprises an opening 76, positioned in such a way that this opening 76, after the profiled section 1 has been hung, is aligned with the opening 45 which was provided in the cover element 43 of the duct 40. The openings 45 and 76 then make it possible to pass wiring from the duct space to the space inside the housing of the solar control means in such a way that, for example, the motor of the solar control means and/or other electrical/electronic components of the solar control means can be supplied with electrical power, for example by means of a battery which is situated in the duct 40 in order to temporarily store energy from the solar cells 50. The second housing element 80 is also substantially L-shaped and comprises the top wall 81 and the rear wall 82 of the housing of the solar control means. At the end of the top wall 81, a third anchoring element 83 is provided which is compatible with the first anchoring element 73. At the end of the rear wall 82, a fourth anchoring element 84 is provided.

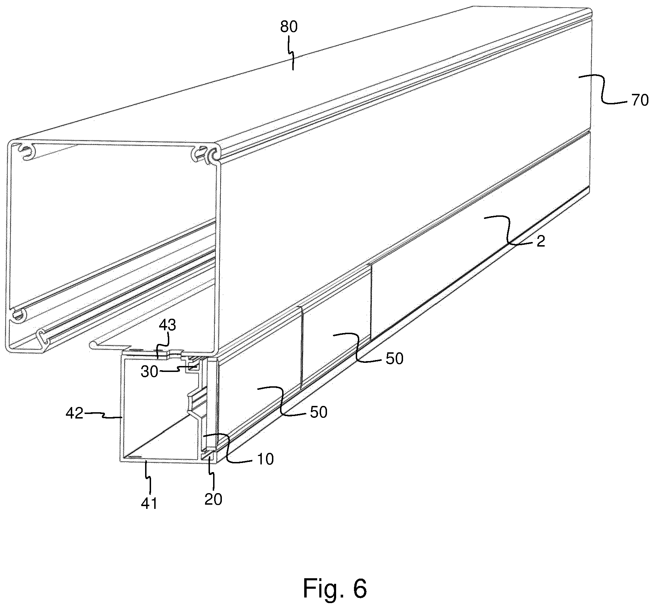

Fig. 6 shows the installation kit from Fig. 5 in the fitted position. The profiled section 1, comprising upright wall 10, first channel-like part 20, second channel-like part 30 and duct walls 41, 42 and 43, supports the solar cells 50 which were glued to the upright wall 10 and the filler piece 2 which was clamped between the first channel-like part 20 and the second channel-like part 30 by sliding. The profiled section 1 was hung from the housing element 70 by means of screw connections. The securing holes 75 in the housing element 70 which are used for this purpose are preferably positioned in such a manner that they come to lie in one plane with the first upright wall 22 of the first channel-like element 20 after installation of the front surface 72 of this housing element 70, and thus also - except for tolerances - in one plane with the front surface of the solar cells 50 and the outer surface of the long leg of L-shaped filler piece 2. In this way, the integrated, minimalist installation shown in in Fig. 6 is achieved which has very limited installation difficulty for the fitter. In addition, the sleek, minimalist installation from Fig. 6 requires little maintenance because the flat finish does not allow accumulation of dirt or dust.

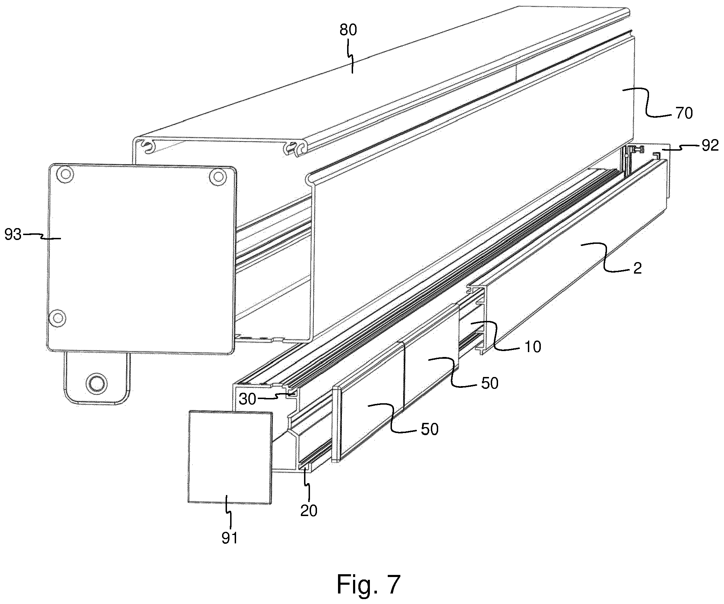

Fig. 7 shows an embodiment of the installation kit which, in addition to the profiled section 1 comprising upright wall 10, first channel-like part 20, second channel-like part 30 and duct 40, the two solar cells 50, the inverted L-shaped filler piece 2, the two housing elements 70 and 80 of a solar control means, now also contains the side walls 91, 92 and 93 for profiled section and solar control means. The side walls 91 and 92 are dimensioned such that they seal off the profiled section 1, in particular duct 40, along the side. Side panel 93 seals the housing of the solar control means on one side. It is evident to the person skilled in the art that a similar side panel is provided to seal the opposite side of the solar control means. The side panels 91, 92, 93 may be configured in such a way that they are secured to the profiled section 1 or the housing elements 70, 80 of the solar control means, respectively, via a click-fit connection and/or a screw connection.

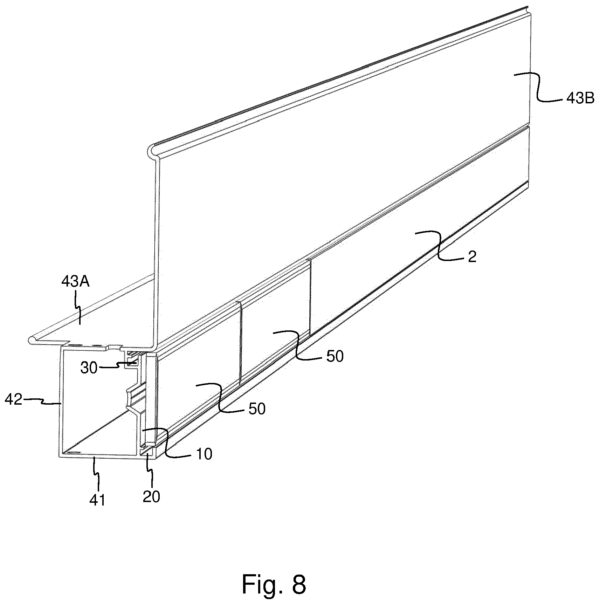

Fig. 8 illustrates another embodiment of the installation kit according to the present invention. The installation kit from Fig. 8 comprises an embodiment of the profiled section according to the present invention, two solar cells 50 and an L-shaped filler piece 2. The profiled section comprises an upright wall 10, a first channel-like part 20, a second channel-like part 30 and duct walls 41, 42, 43A and 43B. Compared to the embodiment from Fig. 1, the cover element of the duct 40 is configured differently here. Now, this cover element comprises a horizontal wall 43A and a vertical wall 43B which is placed in one plane with the first upright wall of the first channel-like element 20. In this way, the profiled section will not only offer the possibility to secure the solar cells 50 and clamp the L-shaped filler piece 2, but the profiled section will also form part of the housing of a solar control means or another apparatus which is fitted above the solar cells 50. The wall 43B which now forms an integral part of the profiled section which also holds the solar panels 50 and the L-shaped filler piece 2 forms the front surface of the housing of such an apparatus. The embodiment from Fig. 8 allows even better integration of a solar panel with the apparatus which it will supply with power, ensures an even more minimalist sleek finish which requires little to no maintenance, and further reduces the installation difficulty since the profiled section no longer has to be hung from the housing of the apparatus by means of screw connections.

Although the present invention was illustrated by means of specific embodiments, it will be clear to the person skilled in the art that the invention is not limited to the details of the previous illustrative embodiments and that the present invention can be carried out with various changes and modifications without departing from the area of application of the invention. Therefore, the present embodiments have to be seen as being illustrative and non-limiting in all regards, wherein the area of application of the invention is described by the attached claims and not by the above description, and any changes which fall within the meaning and the scope of the claims are hereby deemed to be incorporated. In other words, it is assumed that this includes any changes, variations or equivalents which fall within the area of application of the underlying basic principles and the essential attributes of which are defined in this patent application. In addition, the reader of this patent application will understand that the words "comprising" or "comprise" do not exclude other elements or steps, that the words "a" and "an" do not exclude the plural form, and that a single element, such as a computer system, a processor or another integrated unit, can fulfil the functions of various accessories which are mentioned in the claims. Any references in the claims should not be interpreted as limiting the respective claims. The terms "first", "second", "third", "a", "b", "c" and the like, when used in the description or in the claims, are used to distinguish between similar elements or steps and do not necessarily describe a sequential or chronological order. Similarly, the terms "top side", "bottom side", "over", "under" and the like have been used for the benefit of the description and do not necessarily refer to relative positions. It should be understood that these terms are mutually interchangeable under the right circumstances and that embodiments of the invention are able to function according to the present invention in different sequences or orientations than those described or illustrated above.

## Claims

1. Profiled section (1) for securing a solar panel (50), said profiled section (1) comprising:
- an upright wall (10) with an outer surface (10A) finished to glue said solar panel (50) to, and an inner surface (10B);
- a first channel-like element (20) which extends from said outer surface (10A) of said upright wall (10) and whose bottom side is aligned with the bottom side of said upright wall (10); and
- a second channel-like element (30) which extends from said inner surface (10B) of said upright wall (10) at the location of the top side of said upright wall (10),
- wherein said first channel-like element (20) and said second channel-like element (30) are formed in such a way that an inverted L-shaped filler piece (2), placed upside down next to said solar panel (50), can be clamped into said profiled section (1).

2. Profiled section (1) for securing a solar panel according to claim 1, said first channel-like element (20) comprising:
- a first horizontal wall (21) which extends from said outer surface (10A) along the entire length of said upright wall (10); and
- a first upright wall (22) which extends from the end of said first horizontal wall (21) along the entire length of said upright wall (10),
- wherein the width of said first horizontal wall (21) corresponds to the thickness of said solar panel (50).

3. Profiled section (1) for securing a solar panel (50) according to one of the preceding claims, said second channel-like element (30) comprising:
- a second horizontal wall (31) which extends from said inner surface (10B) along the entire length of said upright wall (10); and
- a second upright wall (32) which extends from the end of said second horizontal wall (31) along the entire length of said upright wall (10),
- wherein the width of said second horizontal wall (31) corresponds to a dimension of a first clamping element (203) of said inverted L-shaped filler piece (2).

4. Profiled section (1) for securing a solar panel (50) according to one of the preceding claims, said upright wall (10) furthermore comprising:
- a horizontal support element (15) which extends from said outer surface (10A) along the entire length of said upright wall (10) into the space of said first channel-like element (20) to support said L-shaped filler piece (2).

5. Profiled section (1) for securing a solar panel (50) according to one of the preceding claims, said second channel-like element (30) furthermore comprising:
- a horizontal rail (33) which extends from said second upright wall (32) along the entire length of said upright wall (10) into the space of said second channel-like element (30), so that said first clamping element (203) of said inverted L-shaped filler piece (2), if of U-shaped design, can be clamped into said second channel-like element (30) by sliding along said horizontal rail (33).

6. Profiled section (1) for securing a solar panel (50) according to one of the preceding claims, said upright wall (10) furthermore comprising a V-shaped part (13) which extends along the entire length of said upright wall (10).

7. Profiled section (1) for securing a solar panel (50) according to claim 6, in which an opening (14) is provided in said V-shaped part (13).

8. Profiled section (1) for securing a solar panel (50) according to one of the preceding claims, furthermore comprising a duct (40), said duct (40) comprising:
- a bottom (41) which extends from the bottom side of said inner wall (10B) of said upright wall (10);
- a vertical wall (42) which extends from the end of said bottom (41); and
- a cover element (43) which extends from the end of said vertical wall (42),
- wherein said upright wall (10), said bottom (41), said vertical wall (42) and said cover element (43) together form a duct space.

9. Profiled section (1) for securing a solar panel (50) according to claim 8, in which one or more securing holes (44) are provided in said cover element (43).

10. Profiled section (1) for securing a solar panel (50) according to claim 8 or 9, in which an opening is furthermore provided in said cover element (43).

11. Profiled section (1) for securing a solar panel (50) according to one of claims 8-10, in which said cover element (43A, 43B) furthermore forms part of a housing element for a solar control means.

12. Profiled section (1) for securing a solar panel (50) according to claim 2 and Claim 11, in which said housing element for a solar control means comprises a vertical outer wall (43B) in the same plane as said first upright wall (22).

13. Installation kit, comprising:
- a solar panel (50);
- an inverted L-shaped filler piece (2); and
- a profiled section (1) for securing said solar panel (50) and said L-shaped filler piece (2), said profiled section (1) comprising:
- an upright wall (10) with an outer surface (10A) finished to glue said solar panel (50) to, and an inner surface (10B);
- a first channel-like element (20) which extends from said outer surface (10A) of said upright wall (10) and whose bottom side is aligned with the bottom side of said upright wall (10); and
- a second channel-like element (30) which extends from said inner surface (10B) of said upright wall (10) at the location of the top side of said upright wall (10),
- wherein said first channel-like element (20) and said second channel-like element (30) are formed in such a way that, if placed upside down next to said solar panel (50), said inverted L-shaped filler piece (2) can be clamped into said profiled section (1).

14. Installation kit according to claim 13, furthermore comprising a solar control means.

15. Installation kit according to claim 14, said solar control means comprising:
- a housing element which comprises said profiled section (1).

16. Installation kit according to one of claims 13-15,
wherein said L-shaped filler piece (2) comprises a U-shaped part (203) at an end of the short leg (202) and two support walls (204, 205) at the end of the long leg (201), enabling said L-shaped filler piece (2) to slide along a horizontal rail (33) in said second channel-like element (30) and along a horizontal support element (15) in said first channel-like element (20).

## Patentansprüche

1. Profilabschnitt (1) zur Befestigung eines Solarpaneels (50), wobei der Profilabschnitt (1) umfasst:
- eine aufrechte Wand (10) mit einer Außenfläche (10A), die so fertig gestellt ist, dass das Solarpaneel (50) daran geklebt wird, und einer Innenfläche (10B);
- ein erstes kanalartiges Element (20), das sich von der Außenfläche (10A) der aufrechten Wand (10) erstreckt und dessen Unterseite mit der Unterseite der aufrechten Wand (10) ausgerichtet ist; und
- ein zweites kanalartiges Element (30), das sich von der Innenfläche (10B) der aufrechten Wand (10) an der Stelle der Oberseite der aufrechten Wand (10) erstreckt,
- wobei das erste kanalartige Element (20) und das zweite kanalartige Element (30) derart ausgebildet sind, dass ein umgekehrtes L-förmiges Füllstück (2), kopfüber neben dem Solarpaneel (50) platziert, in den Profilabschnitt (1) geklemmt werden kann.

2. Profilabschnitt (1) zur Befestigung eines Solarpaneels nach Anspruch 1, wobei das erste kanalartige Element (20) umfasst:
- eine erste horizontale Wand (21), die sich von der Außenfläche (10A) entlang der gesamten Länge der aufrechten Wand (10) erstreckt; und
- eine erste aufrechte Wand (22), die sich von dem Ende der ersten horizontalen Wand (21) entlang der gesamten Länge der aufrechten Wand (10) erstreckt,
- wobei die Breite der ersten horizontalen Wand (21) der Dicke des Solarpaneels (50) entspricht.

3. Profilabschnitt (1) zur Befestigung eines Solarpaneels (50) nach einem der vorhergehenden Ansprüche, wobei das zweite kanalartige Element (30) umfasst:
- eine zweite horizontale Wand (31), die sich von der Innenfläche (10B) entlang der gesamten Länge der aufrechten Wand (10) erstreckt; und
- eine zweite aufrechte Wand (32), die sich von dem Ende der zweiten horizontalen Wand (31) entlang der gesamten Länge der aufrechten Wand (10) erstreckt,
- wobei die Breite der zweiten horizontalen Wand (31) einer Abmessung eines ersten Klemmelements (203) des umgekehrten L-förmigen Füllstücks (2) entspricht.

4. Profilabschnitt (1) zur Befestigung eines Solarpaneels (50) nach einem der vorhergehenden Ansprüche, wobei die aufrechte Wand (10) ferner umfasst:
- ein horizontales Stützelement (15), das sich von der Außenfläche (10A) entlang der gesamten Länge der aufrechten Wand (10) in den Raum des ersten kanalartigen Elements (20) erstreckt, um das L-förmige Füllstück (2) zu tragen.

5. Profilabschnitt (1) zur Befestigung eines Solarpaneels (50) nach einem der vorhergehenden Ansprüche, wobei das zweite kanalartige Element (30) ferner umfasst:
- eine horizontale Schiene (33), die sich von der zweiten aufrechten Wand (32) entlang der gesamten Länge der aufrechten Wand (10) in den Raum des zweiten kanalartigen Elements (30) erstreckt, sodass das erste Klemmelement (203) des umgekehrten L-förmigen Füllstücks (2), wenn U-förmig ausgebildet, durch Verschieben entlang der horizontalen Schiene (33) in das zweite kanalartige Element (30) geklemmt werden kann.

6. Profilabschnitt (1) zur Befestigung eines Solarpaneels (50) nach einem der vorhergehenden Ansprüche, wobei die aufrechte Wand (10) ferner ein V-förmiges Teil (13) umfasst, das sich entlang der gesamten Länge der aufrechten Wand (10) erstreckt.

7. Profilabschnitt (1) zur Befestigung eines Solarpaneels (50) nach Anspruch 6, wobei in dem V-förmigen Teil (13) eine Öffnung (14) bereitgestellt ist.

8. Profilabschnitt (1) zur Befestigung eines Solarpaneels (50) nach einem der vorhergehenden Ansprüche, ferner umfassend einen Schacht (40), wobei der Schacht (40) umfasst:
- einen Boden (41), der sich von der Unterseite der Innenwand (10B) der aufrechten Wand (10) erstreckt;
- eine vertikale Wand (42), die sich von dem Ende des Bodens (41) erstreckt; und
- ein Abdeckelement (43), das sich von dem Ende der vertikalen Wand (42) erstreckt,
- wobei die aufrechte Wand (10), der Boden (41), die vertikale Wand (42) und das Abdeckelement (43) zusammen einen Schachtraum bilden.

9. Profilabschnitt (1) zur Befestigung eines Solarpaneels (50) nach Anspruch 8, wobei ein oder mehrere Befestigungslöcher (44) in dem Abdeckelement (43) bereitgestellt sind.

10. Profilabschnitt (1) zur Befestigung eines Solarpaneels (50) nach Anspruch 8 oder 9, wobei ferner, in dem Abdeckelement (43), eine Öffnung bereitgestellt ist.

11. Profilabschnitt (1) zur Befestigung eines Solarpaneels (50) nach einem der Ansprüche 8-10, wobei das Abdeckelement (43A, 43B) ferner Bestandteil eines Gehäuseelements für ein Solarsteuerungsmittel ist.

12. Profilabschnitt (1) zur Befestigung eines Solarpaneels (50) nach Anspruch 2 und Anspruch 11, wobei das Gehäuseelement für ein Solarsteuerungsmittel eine vertikale Außenwand (43B) in derselben Ebene wie die erste aufrechte Wand (22) umfasst.

13. Installationsbausatz, umfassend:
- ein Solarpaneel (50);
- ein umgekehrtes L-förmiges Füllstück (2); und
- einen Profilabschnitt (1) zur Befestigung des Solarpaneels (50) und des L-förmigen Füllstücks (2), wobei der Profilabschnitt (1) umfasst:
- eine aufrechte Wand (10) mit einer Außenfläche (10A), die so fertig gestellt ist, dass das Solarpaneel (50) daran geklebt wird, und einer Innenfläche (10B);
- ein erstes kanalartiges Element (20), das sich von der Außenfläche (10A) der aufrechten Wand (10) erstreckt und dessen Unterseite mit der Unterseite der aufrechten Wand (10) ausgerichtet ist; und
- ein zweites kanalartiges Element (30), das sich von der Innenfläche (10B) der aufrechten Wand (10) an der Stelle der Oberseite der aufrechten Wand (10) erstreckt,
- wobei das erste kanalartige Element (20) und das zweite kanalartige Element (30) derart ausgebildet sind, dass, wenn kopfüber neben dem Solarpaneel (50) platziert, das umgekehrte L-förmige Füllstück (2) in den Profilabschnitt (1) geklemmt werden kann.

14. Installationsbausatz nach Anspruch 13, ferner umfassend ein Solarsteuerungsmittel.

15. Installationsbausatz nach Anspruch 14, wobei das Solarsteuerungsmittel umfasst:
- ein Gehäuseelement, das den Profilabschnitt (1) umfasst.

16. Installationsbausatz nach einem der Ansprüche 13-15,
wobei das L-förmige Füllstück (2) ein U-förmiges Teil (203) an einem Ende des kurzen Schenkels (202) und zwei Stützwände (204, 205) an dem Ende des langen Schenkels (201) umfasst, wodurch das L-förmige Füllstück (2) entlang einer horizontalen Schiene (33) in dem zweiten kanalartigen Element (30) und entlang eines horizontalen Stützelements (15) in dem ersten kanalartigen Element (20) verschiebbar ist.

## Revendications

1. Section profilée (1) pour fixer un panneau solaire (50), ladite section profilée (1) comprenant :
- une paroi montante (10) avec une surface externe (10A) finie pour coller ledit panneau solaire (50) à celle-ci, et une surface interne (10B) ;
- un premier élément de type canal (20) qui s'étend depuis ladite surface externe (10A) de ladite paroi montante (10) et dont le côté inférieur est aligné avec le côté inférieur de ladite paroi montante (10) ; et
- un second élément de type canal (30) qui s'étend depuis ladite surface interne (10B) de ladite paroi montante (10) à l'emplacement du côté supérieur de ladite paroi montante (10),
- dans laquelle ledit premier élément de type canal (20) et ledit second élément de type canal (30) sont formés de manière à ce qu'une pièce de remplissage en forme de L inversé (2), placée retournée à côté dudit panneau solaire (50), puisse être serrée dans ladite section profilée (1).

2. Section profilée (1) pour fixer un panneau solaire selon la revendication 1, ledit premier élément de type canal (20) comprenant :
- une première paroi horizontale (21) qui s'étend depuis ladite surface externe (10A) sur toute la longueur de ladite paroi montante (10) ; et
- une première paroi montante (22) qui s'étend depuis l'extrémité de ladite première paroi horizontale (21) sur toute la longueur de ladite paroi montante (10),
- dans laquelle la largeur de ladite première paroi horizontale (21) correspond à l'épaisseur dudit panneau solaire (50).

3. Section profilée (1) pour fixer un panneau solaire (50) selon l'une des revendications précédentes, ledit second élément de type canal (30) comprenant :
- une seconde paroi horizontale (31) qui s'étend depuis ladite surface interne (10B) sur toute la longueur de ladite paroi montante (10) ; et
- une seconde paroi montante (32) qui s'étend depuis l'extrémité de ladite seconde paroi horizontale (31) sur toute la longueur de ladite paroi montante (10),
- dans lequel la largeur de ladite seconde paroi horizontale (31) correspond à une dimension d'un premier élément de serrage (203) de ladite pièce de remplissage en forme de L inversé (2).

4. Section profilée (1) pour fixer un panneau solaire (50) selon l'une des revendications précédentes, ladite paroi montante (10) comprenant en outre :
- un élément de support horizontal (15) qui s'étend depuis ladite surface externe (10A) sur toute la longueur de ladite paroi montante (10) dans l'espace dudit premier élément de type canal (20) pour supporter ladite pièce de remplissage en forme de L (2).

5. Section profilée (1) pour fixer un panneau solaire (50) selon l'une des revendications précédentes, ledit second élément de type canal (30) comprenant en outre :
- un rail horizontal (33) qui s'étend depuis ladite seconde paroi montante (32) sur toute la longueur de ladite paroi montante (10) dans l'espace dudit second élément de type canal (30), de sorte que ledit premier élément de serrage (203) de ladite pièce de remplissage en forme de L inversé (2), s'il est de conception en forme de U, puisse être serré dans ledit second élément de type canal (30) en coulissant le long dudit rail horizontal (33).

6. Section profilée (1) pour fixer un panneau solaire (50) selon l'une des revendications précédentes, ladite paroi montante (10) comprenant en outre une partie en forme de V (13) qui s'étend sur toute la longueur de ladite paroi montante (10).

7. Section profilée (1) pour fixer un panneau solaire (50) selon la revendication 6, dans laquelle une ouverture (14) est prévue dans ladite partie en forme de V (13).

8. Section profilée (1) pour fixer un panneau solaire (50) selon l'une des revendications précédentes, comprenant en outre un conduit (40), ledit conduit (40) comprenant :
- un fond (41) qui s'étend depuis le côté inférieur de ladite paroi interne (10B) de ladite paroi montante (10) ;
- une paroi verticale (42) qui s'étend depuis l'extrémité dudit fond (41) ; et
- un élément de capot (43) qui s'étend depuis l'extrémité de ladite paroi verticale (42),
- dans laquelle ladite paroi montante (10), ledit fond (41), ladite paroi verticale (42) et ledit élément de capot (43) forment ensemble un espace de conduit.

9. Section profilée (1) pour fixer un panneau solaire (50) selon la revendication 8, dans laquelle un ou plusieurs trous de fixation (44) sont prévus dans ledit élément de capot (43).

10. Section profilée (1) pour fixer un panneau solaire (50) selon la revendication 8 ou 9, dans laquelle une ouverture est en outre prévue dans ledit élément de capot (43).

11. Section de profilé (1) pour fixer un panneau solaire (50) selon l'une des revendications 8 à 10, dans laquelle ledit élément de capot (43A, 43B) fait en outre partie d'un élément de boîtier pour un moyen de commande solaire.

12. Section de profilé (1) pour fixer un panneau solaire (50) selon la revendication 2 et la revendication 11, dans laquelle ledit élément de boîtier pour un moyen de commande solaire comprend une paroi externe verticale (43B) dans le même plan que ladite première paroi montante (22).

13. Kit d'installation, comprenant :
- un panneau solaire (50) ;
- une pièce de remplissage en forme de L inversé (2) ; et
- une section profilée (1) pour fixer ledit panneau solaire (50) et ladite pièce de remplissage en forme de L (2), ladite section profilée (1) comprenant :
- une paroi montante (10) avec une surface externe (10A) finie pour coller ledit panneau solaire (50) à celle-ci, et une surface interne (10B) ;
- un premier élément de type canal (20) qui s'étend depuis ladite surface externe (10A) de ladite paroi montante (10) et dont le côté inférieur est aligné avec le côté inférieur de ladite paroi montante (10) ; et
- un second élément de type canal (30) qui s'étend depuis ladite surface interne (10B) de ladite paroi montante (10) à l'emplacement du côté supérieur de ladite paroi montante (10),
- dans lequel ledit premier élément de type canal (20) et ledit second élément de type canal (30) sont formés de manière à ce que, si elle est placée retournée à côté dudit panneau solaire (50), ladite pièce de remplissage en forme de L inversé (2) puisse être serrée dans ladite section profilée (1).

14. Kit d'installation selon la revendication 13, comprenant en outre un moyen de commande solaire.

15. Kit d'installation selon la revendication 14, lesdits moyens de commande solaire comprenant :
- un élément de boîtier qui comprend ladite section profilée (1).

16. Kit d'installation selon l'une des revendications 13 à 15,
dans lequel ladite pièce de remplissage en forme de L (2) comprend une partie en forme de U (203) à une extrémité de la jambe courte (202) et deux parois de support (204, 205) à l'extrémité de la jambe longue (201), permettant à ladite pièce de remplissage en forme de L (2) de coulisser le long d'un rail horizontal (33) dans ledit second élément de type canal (30) et le long d'un élément de support horizontal (15) dans ledit premier élément de type canal (20).
